# EUROPEAN PATENT APPLICATION

(11) **EP 4 653 979 A1**
(43) Date of publication of application: **26.11.2025**
(21) Application number: 25178391.6
(22) Date of filing: 23.05.2025
(51) Int. Cl.: G05G 1/08, G05G 5/28, G05G 5/00, F24C 3/12, F24C 7/08, H01H 25/06, F16C 3/12, F16C 7/08

(54) **KNOB ASSEMBLY FOR COOKING APPARATUS**

(30) Priority: 24.05.2024 KR 20240067957; 22.10.2024 KR 20240145026
(71) Applicant: LG Electronics Inc., Yeongdeungpo-gu Seoul 07336 (KR)
(72) Inventor: CHO, SangHyeok, 08592 Seoul (KR); YANG, Daebong, 08592 Seoul (KR)
(74) Representative: Vossius & Partner Patentanwälte Rechtsanwälte mbB

(57) **Abstract**

Disclosed is a knob assembly (100) for a cooking apparatus, featuring a knob body (NB) that rotates on and moves axially along a driving shaft (71) protruding from a control panel (30). A coupling part (150), connected to the driving shaft (71), is axially movable independently of the knob body (NB). The knob body (NB) includes an exposed operating button (140) that moves independently in a direction different from the axial direction. This operating button (140) has a first position allowing axial movement without interfering with the coupling part (150), and a second position that creates interference with the coupling part (150) during axial movement. Consequently, a user must first press the operating button (140) to enable axial pressing of the coupling part (150) and driving shaft (71) for operating the cooking apparatus, thereby preventing unintended operation or errors.

## Description

The present application claims priority to Korean Patent Application No. 10-2024-0067957, filed May 24, 2024 and Korean Patent Application No. 10-2024-0145026, filed October 22, 2024.

The present disclosure relates to a knob assembly for a cooking apparatus.

A cooking apparatus is a device used to cook ingredients to make food. The cooking apparatus can also be used to heat food to the right temperature for consumption. The cooking apparatus may be classified in various ways according to the forms of heat sources used and the types of fuels. For example, the cooking apparatus may be categorized as open type or sealed type depending on the form of the space where food is placed. The sealed-type cooking apparatus includes ovens and microwave ovens, and the open-type cooking apparatus includes cooktops and griddles.

The sealed-type cooking shields the space where ingredients are placed with doors and heats the shielded space to cook the food. The open-type cooking apparatus is configured such that ingredients or a container storing ingredients is located in an open space and the ingredients or container is heated to cook ingredients to make food. In recent years, combination cooking apparatuses, which are a combination of sealed-type and open-type cooking apparatuses, has been used. The combination cooking apparatuses use a combination of heat sources to cook a variety of ingredients and can cook multiple foods simultaneously.

The cooking apparatus may be equipped with knobs for operation. The knob can be used to turn the cooking apparatus on or off, or to set cooking modes. Furthermore, the knob may be used to adjust a heating temperature.

In the cooking appliance, for example a gas range, the knob may be manipulated in a push and turn manner to operate the cooking appliance. The push and turn knob is implemented such that a user must hold it down and rotate the knob to operate the cooking apparatus. The user can adjust a heating temperature or select a cooking mode by pressing the knob and adjusting the amount of rotation on the drive shaft. The push and turn knob increases the safety of the cooking apparatus by requiring both steps to operate the cooking apparatus.

However, the push and turn knob also protrudes outward, so it's possible for users to rotate the knob while unintentionally pressing the knob. For example, without recognizing of the user, the user's body touches the knob to press the knob and rotate the knob. Furthermore, it is also possible for a toddler to operate the knob to start the cooking apparatus. As described above, this can lead to fire or burns to the user, so it is important to increase the stability of the cooking apparatus.

The present disclosure is provided to solve the above-described problems of the related art, and an objective of the present disclosure is to provide a knob assembly having a operating button (safety button), and prevent the knob assembly from being operated when the operating button is not pressed.

Another objective of the present disclosure is to form an operation direction of a operating button different from a rotation direction and a pressing direction of a knob assembly.

Yet another objective of the present disclosure is to simplify a structure of knob assembly by minimizing the number of parts added due to a operating button.

To achieve the above objectives, according to the present disclosure, there is provided a knob assembly including: a driving shaft protruding from a control panel; a knob body rotated on the driving shaft and moving linearly in a axial direction of the driving shaft, a coupling portion connected to the driving shaft and movable in the axial direction independently from the knob body; and a operating button comprising a operating portion exposed outside of the knob body and moved in a different direction from the axial direction, wherein the operating button may have a first position forming a moving path in the axial direction independent from the coupling portion, and a second position forming a moving path interfering with the coupling portion in the axial direction. Therefore, only when the user presses the operating button first, the coupling portion and the driving shaft are pressed in the axial direction to operate the cooking apparatus, thereby preventing arbitrary operation or errors of the knob assembly by the operating button.

When the knob body is moved in the axial direction while the operating button is arranged at the second position, the coupling portion may be moved in the axial direction with the operating button.

At the first position, the knob body and the operating button may be moved in the axial direction independently from the coupling portion, and at the second position, the knob body and the operating button may be moved in the axial direction along with the coupling portion.

The coupling portion between the driving shaft and the knob body may transmit a rotation force of the knob body to the driving shaft.

The operating button may include a pusher interfering with a surface of the coupling portion in the axial direction, at the second position, and the pusher may protrude from the operating button in a direction different from the axial direction.

The operating button may include a pusher interfering with a surface of the coupling portion in the axial direction, at the second position, and the pusher may include a pusher groove surrounding an edge of the coupling portion.

At the first position, the operating button and the coupling portion may be spaced from each other by a first distance in a radial direction of the driving shaft, and at the second position, the operating button and the coupling portion may overlap with each other by a second distance in the radial direction of the driving shaft. At this point, the second distance may be longer than the first distance.

The coupling portion may be formed on an end portion of the driving shaft integrally with the driving shaft.

The knob body may include a coupler into which the coupling portion may be inserted, and the coupling portion comprises a shaft coupling groove into which an end portion of the driving shaft may be inserted.

The coupling portion may be disposed between the knob body and the driving shaft in a radial direction of the driving shaft.

The surface of the coupler and the surface of the coupling portion may include a first uneven portion and a second uneven portion that may be provided to be engaged with each other.

A first uneven portion and a second uneven portion may be respectively formed on a surface of the coupling portion and a surface of the coupler. The first uneven portion is formed into a continued uneven shape in a circumferential direction on the surface of the coupler.

The second uneven portion may protrude in a direction of widening an area of the operating button and the coupling portion overlapping with each other in the axial direction.

The coupling portion may include a stepped surface that forms a cross-sectional area of the coupling portion differently. The operating button may interfere with the stepped surface at the second position.

A knob return member may be provided between the knob body and the coupling portion and provides an elastic force to the knob body in a direction away from the coupling portion.

Both end portions of the knob return member are respectively connected to the knob body and the coupling portion. The knob body provides an elastic force to the knob body in a direction of spacing the knob body and the coupling portion from each other in the axial direction.

A button return member may be provided in the knob body. The button return member may provide an elastic force to the operating button in a direction of moving the operating button to the first position.

At the second position, the operating button may interfere with a first end portion of the coupling portion. The knob body may include a coupling holder supporting a second end portion of the coupling portion.

The operating button may be moved between the first position and the second position independently from the knob body in a direction different from the axial direction. When the knob body is rotated on the driving shaft, the operating button is rotated with the knob body and is moved to a third position.

The knob body and the operating button may restrict each other in the axial direction, and the knob body and the operating button may be linearly moved together in the axial direction.

A operating hole may be formed by penetrating the knob body in a direction perpendicular to the axial direction. The operating portion may be exposed outwards through the operating hole, and the operating portion may form a portion of an exterior part of the knob body.

The operating button may interfere with an edge of the operating hole so that movement thereof may be restricted in a process in which the operating button is moved from the second position to the first position.

The knob body may include a first knob body in which a operating hole is formed and exposes the operating button. A second knob body may be provided inside the first knob body and rotated and linearly moved with the first knob body. The second knob body may be rotated and linearly moved with the first knob body. The first knob body may include a operating hole through which the operating portion of the operating button is exposed.

The second knob body may include a coupler coupled to the coupling portion. A remaining portion of the second knob body excluding the coupler, and the operating button may be disposed at opposite positions to each other based on the coupler.

A pair of button return members may be provided in the knob body and provides an elastic force to the operating button. The second knob body may include a support plate protruding in the axial direction toward an opposite side of the control panel. The support plate may be disposed between the pair of button return members.

As described above, according to the present disclosure, the knob assembly and the cooking apparatus having the same have the following effects.

According to the present disclosure, when the operating button is not pressed, the driving shaft is not pressed with the knob body even when the knob body (handle) is pressed in the axial direction. The user can press the operating button first and then the knob body to pressurize the driving shaft to activate the cooking apparatus. As described above, the operating button can prevent tampering of the knob assembly or malfunctioning thereof, and therefore the stability of the cooking apparatus can be improved.

However, when the user presses the knob body in the axial direction without pressing the operating button, the driving shaft are not pressed together, and the user can detect a resistance smaller than a resistance in the axial direction. As described above, according to the present disclosure, the user can intuit that the driving shaft is not working properly because the operating button is not pressed, and the usability of the cooking apparatus can be improved.

Furthermore, according to the present disclosure, the operating button may be operated in a direction different from the shaft-directional movement of the knob body. When the direction of pressing the operating button and the direction of pressing the knob body are formed different from each other, it is less likely that the user accidentally operates the knob assembly. Accordingly, the cooking apparatus of the cooking appliance can be increased.

Specifically, the operating portion of the operating button may be moved along a linear path or a curved path in the second direction different from the axial direction (first direction), i.e., a linearly moving direction of the knob body, and the rotational direction of the knob body. Accordingly, this further reduces the probability of the knob assembly actuated randomly due to user error or interference with objects around the cooking apparatus.

Furthermore, according to the present disclosure, the operating button may protrude sideways of the knob body. As described above, the operating button protruding sideways may be pressed naturally when the user grips the knob body. Therefore, even when the operating button is added, the ease of assembly of the knob assembly is not deteriorated, and the user can easily control the cooking apparatus.

Furthermore, according to the present disclosure, the operating button may be linearly moved between the first position in which the shaft-directional movement interferes and the second position in which the shaft-directional movement is possible. At this point, the operating button interferes with the base portion of the knob assembly or the control panel to which the knob assembly is mounted at the first position, thereby restricting movement in the axial direction. Therefore, the structure of restricting manipulation of the knob assembly can be simply implemented, and the number of parts added due to the operating button can be minimized.

Furthermore, according to the present disclosure, in the knob body, the second knob body (inner body) may be provided in the first knob body (outer body) forming the exterior part, and the second knob body (inner body) may be symmetric to the operating button. When the second knob body and the operating button are disposed symmetrically at the knob assembly, and it is possible to prevent the knob assembly from leaning in one direction due to a shift in its center of gravity caused by the operating button. Therefore, according to the present disclosure, the knob assembly can provide excellent control even when the operating button is added. Furthermore, in the knob assembly, the second knob body fills an empty space at one portion without the operating button, so that the durability of the entire knob assembly can be increased.

Furthermore, when the second knob body and the operating button are disposed symmetrically at the knob assembly, the volume of the parts occupied in the knob assembly can be reduced, and the inside space utilization of the knob assembly can be increased. Accordingly, the knob assembly can be miniaturized and be made light weight.

Furthermore, according to the present disclosure, the second knob body constituting the knob body may be responsible for coupling with other parts such as the driving shaft (valve shaft). Then, the first knob body exposed outward so that the user grips may have a relatively simple structure, and contraction due to a complex form thereof can be prevented during injection molding. Therefore, the aesthetic and the manufacturing quality of the knob assembly can be improved.

Furthermore, according to the present disclosure, the pair of elastic members may be provided in the knob body to return the operating button to the first position. The support plate provided in the second knob body is disposed between the pair of elastic members to guide the pair of elastic members when the elastic members are contracted/recovered. As described above, according to the present disclosure, the pair of elastic members returns the operating button with each other, so that the operating button may be stably returned without twisting to either side, which can improve the reliability of the operation of the knob assembly.

### BRIEF DESCRIPTION OF THE DRAWINGS

FIG. 1 is a perspective view showing an embodiment of a cooking apparatus to which a knob assembly according to the present disclosure is applied.
FIG. 2 is a perspective view showing a structure of a control panel and a knob assembly constituting the embodiment of the cooking apparatus shown in FIG. 1.
FIG. 3 is an exploded-perspective view showing components constituting an embodiment of the knob assembly according to the present disclosure.
FIG. 4 is an exploded-perspective view at a different angle from FIG. 3, the view showing the components constituting the embodiment of the knob assembly according to the present disclosure.
FIG. 5 is a perspective view showing a state without a first knob body constituting the embodiment of the knob assembly according to the present disclosure.
FIG. 6 is a perspective view showing the embodiment of the knob assembly according to the present disclosure in a first state (locked state).
FIG. 7 is a sectional view taken along line VII-VII' of FIG. 6.
FIG. 8 is a perspective view showing the embodiment of the knob assembly according to the present disclosure with a knob body pressed in a axial direction from the first state (locked state).
FIG. 9 is a sectional view taken along a line IX-IX' of FIG. 8.
FIG. 10 is a perspective view showing the embodiment of the knob assembly according to the present disclosure in a second state (unlocked state).
FIG. 11 is a sectional view taken along a line XI-XI' of FIG. 10.
FIG. 12 is a perspective view showing the embodiment of the knob assembly according to the present disclosure at a third state (pressed state) in which the knob body is pressed in the axial direction from the second state (unlocked state).
FIG. 13 is a sectional view taken along a line XIII-XIII' of FIG. 12.
FIG. 14 is a perspective view showing the embodiment of the knob assembly according to the present disclosure in a fourth state (rotated state).
FIG. 15 is a perspective view showing mutually independent paths in the axial direction for a operating button and a coupling portion constituting the embodiment of the knob assembly according to the present disclosure.
FIG. 16 is a plan view showing mutually independent paths in the axial direction for the operating button and the coupling portion constituting the embodiment of the knob assembly according to the present disclosure.
FIG. 17 is a perspective view showing mutually interfering paths in the axial direction for a operating button and a coupling portion constituting the embodiment of the knob assembly according to the present disclosure.
FIG. 18 is a plan view showing mutually interfering paths in the axial direction for the operating button and the coupling portion constituting the embodiment of the knob assembly according to the present disclosure.
FIG. 19 is a sectional view showing an inner structure of a second embodiment of the knob assembly according to the present disclosure.
FIG. 20 is a sectional view showing an inner structure of a third embodiment of the knob assembly according to the present disclosure.
FIG. 21 is a sectional view showing an inner structure of a fourth embodiment of the knob assembly according to the present disclosure.
FIG. 22 is a plan view showing a structure of a fifth embodiment of the knob assembly according to the present disclosure.
FIG. 23 is a plan view showing a structure of a sixth embodiment of the knob assembly according to the present disclosure.

### DETAILED DESCRIPTION OF THE DISCLOSURE

Hereinbelow, some embodiments of the present disclosure will be described in detail with reference to exemplary drawings. Wherever possible, the same reference numerals will be used throughout the drawings and the description to refer to the same or like elements or parts. Furthermore, it is to be noted that, when the detailed description of the functions and configuration of conventional elements related to the present disclosure may make the gist of the present disclosure unclear, a detailed description of those elements will be omitted.

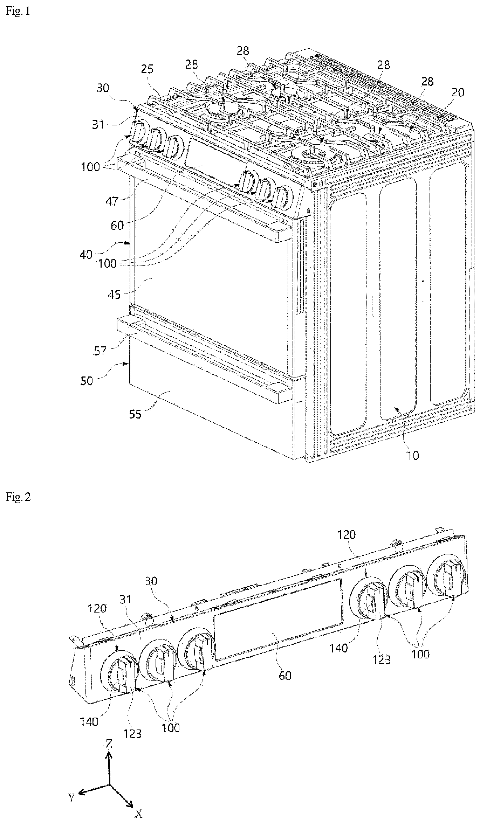

The present disclosure relates to a knob assembly 100 and a cooking apparatus having the same, and at this point, a cooktop unit 20 including a plurality of heating devices 28 may be provided at an upper portion of the cooking apparatus. The plurality of heating devices 28 may be a gas heating device 28 using gas as an energy source, an electric cooktop, or an induction. FIG. 1 illustrates the cooktop unit 20 with a gas heating device 28 among the heating devices 28 as an example. As shown in FIG. 1, the heating device 28 may be disposed to be exposed on the upper portion of the cooking apparatus. As another example, the heating device 28 may be disposed at an inner portion of the cooking apparatus or inner and outer portions of the cooking apparatus respectively.

The knob assembly 100 may be used to control the heating device 28. A user manipulates the knob assembly 100 to turn on/off the heating device 28. The user manipulates the knob assembly 100 to adjust the amount of heat supplied by the heating device 28. Otherwise, the user manipulates the knob assembly 100 to control an oven unit 40, 50, or select a cooking mode of the cooking apparatus.

The user may press and then rotate the knob assembly 100 to control the heating device 28. At this point, as shown in FIG. 2, to prevent the knob assembly 100 from being arbitrarily manipulated due to user mistakes or interference with surrounding objects, the knob assembly 100 of the present disclosure includes a operating button 140. Hereinbelow, the knob assembly 100 will be described with the operating button 140 and malfunction prevention structure.

When describing a structure of the cooking apparatus, an exterior part of the cooking apparatus may be formed of an outer body 10. Without a door disposed in a front portion, the outer body 10 may form a frame of the cooking apparatus. A separate inner housing (not shown) may be disposed inside the outer body 10.

At least one heating device 28 is disposed at the cooktop unit 20 to heat food to be cooked or a container in which food is stored. In the embodiment, a total of four heating devices 28 are disposed on the cooktop unit 20.

The cooktop unit 20 may include a grate 25. The grate 25 may be a frame enabling a cooking container to be placed on an upper portion of each heating device 28. The grate 25 may be removably seated on the cooktop unit 20. The grate 25 may be located above the heating devices 28.

A control panel 30 may be disposed at an upper portion of the oven unit 40, 50, and a front portion of the cooktop unit 20. The control panel 30 may include the knob assemblies 100 to control the oven unit 40, 50 and the cooktop unit 20. A plurality of knob assemblies 100 may control respectively the heating devices 28 and the oven devices. The control panel 30 may be a control device, or may be referred to as a front panel. The control panel 30 may not be disposed at the front portion of the cooktop unit 20, and may be disposed at different locations, such as a lower portion of the cooking apparatus, a side surface of the cooking apparatus, an upper surface of the cooking apparatus, or the like.

The control panel 30 may include a display unit 60. The display unit 60 may display information about the cooking apparatus. The display unit 60 is made of a touch panel, and may be used for the user to control the cooking apparatus. In other words, the display unit 60 may be a type of the operating portion 143. As another example, the display unit 60 may be omitted.

When describing the oven unit 40, 50, the oven unit 40, 50 may include a plurality of oven devices. In the embodiment, the oven unit 40, 50 may include the first oven device 40 and a second oven device 50. The first oven device 40 and the second oven device 50 may be disposed at different heights. The first oven device 40 and the second oven device 50 may have separately partitioned cooking chambers, respectively.

A first door 45 of the first oven device 40 may be operated in a type of pull-down method in which an upper end is rotated vertically on a lower end. As another example, the first door 45 may be operated in the side swing manner in which the door is opened sideways. Reference numeral 47 indicates a handle to open and close the first door 45.

A second door 55 of the second oven device 50 may be operated in a forward and backward sliding manner. As another example, like the above-described first door 45, the second door 55 may be moved in a type of pull-down method in which an upper end is rotated vertically on a lower end. Reference numeral 57 indicates a handle to open and close the second door 55.

Next, the knob assembly 100 will be described. Referring to FIGS. 1 and 2, in the embodiment, 6 knob assemblies 100 are disposed on the control panel 30. This is just one example, the control panel 30 may include 1 to 5 knob assemblies or 7 or more knob assemblies 100. As another example, the knob assembly 100 is not disposed on the control panel 30, but is disposed on an upper surface or a side surface of the cooking apparatus. As another example, the knob assembly 100 may be disposed on a lower portion of a front surface of the cooking apparatus.

As shown in FIG. 2, the knob assembly 100 may include a circular body, and a portion protruding from the circular body and facilitating the user's grip. In the embodiment, the operating button 140 is provided on a side surface of the knob assembly 100. Only when the user presses the operating button 140 first, operation of the knob assembly 100, more specifically, operation in the axial direction is possible.

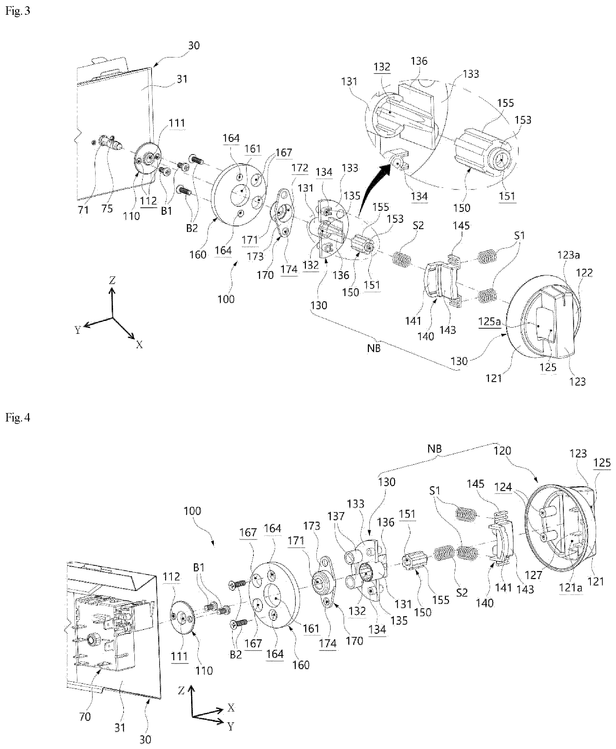

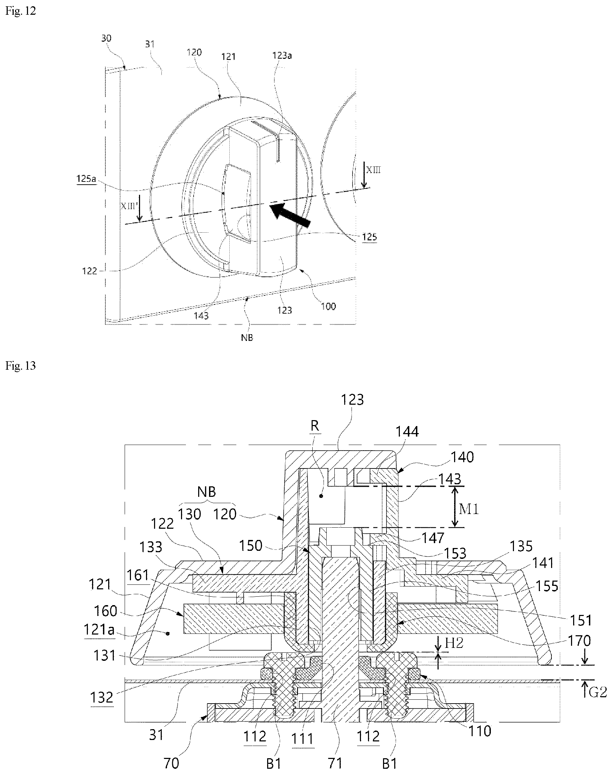

For reference, hereinbelow, the axial direction is a longitudinal direction of a driving shaft 71 (referring to FIG. 3), and is an X-axial direction in FIGS. 2 to 4. Hereinbelow, a rotational direction is a direction in which the knob assembly 100 is rotated on the driving shaft 71 (referring to arrow in FIG. 12). Furthermore, hereinbelow, a radial direction is a radial direction of the driving shaft 71 and is equal to a radial direction of a rotation path of the knob assembly 100. A Y-axial direction in FIGS. 2 to 4 is a portion of the radial direction. Hereinbelow, a linearly moving direction of the operating button 140 is a Y-axial direction in FIGS. 2 to 4. Of course, when the knob assembly 100 is rotated, the linearly moving direction of the operating button 140 may be changed.

Referring to FIGS. 3 and 4, the views shows exploded states of parts of the knob assembly 100. For convenience of description, the driving shaft 71 will be described first. The driving shaft 71 is coupled to the knob assembly 100. The driving shaft 71 is a rotation center of the knob assembly 100. The driving shaft 71 may be rotated with the knob assembly 100 when the knob assembly 100 is rotated. The driving shaft 71 may be linearly moved with the knob assembly 100 when the knob assembly 100 is moved in the axial direction.

The driving shaft 71 may be provided at a heating driving part 70 (referring to FIG. 4). The heating driving part 70 may serve to supply an energy source to the heating device 28. For example, the heating driving part 70 may be configured to be driven by the driving shaft 71 and control the heating device 28. Therefore, the driving shaft 71 may be a valve shaft.

At this point, the energy source may be gas or electricity. When the energy source is electricity, the heating driving part 70 may be referred to as a regulator, and when the energy source is gas, the heating driving part 70 may be referred to as a valve assembly. The driving shaft 71 may be a part constituting the knob assembly 100. As another example, the driving shaft 71 may be a portion of the heating driving part 70. Reference numeral 32 indicates a through hole of a front plate 31 through which the driving shaft 71 passes.

More specifically, the driving shaft 71 may be coupled to the heating driving part 70 pushably and rotatably. At this point, when the driving shaft 71 is not pushed, the heating driving part 70 may prevent the driving shaft 71 from being rotated. As the driving shaft 71 is pushed and rotated with respect to the heating driving part 70, the heating driving part 70 may supply the energy source to the heating device 28.

The driving shaft 71 may include a coupling member 75. The coupling member 75 may surround an outer circumferential surface of the driving shaft 71. The coupling member 75 may be made of an elastic material such as a leaf spring. The coupling member 75 may be disposed between the driving shaft 71 and a shaft coupling groove 151 of a coupling portion 150 to be described below, and may provide an elastic force between the driving shaft 71 and the shaft coupling groove 151. Accordingly, it is possible to prevent the driving shaft 71 from being removed from the shaft coupling groove 151.

The driving shaft 71 may be manipulated with the knob assembly 100. More specifically, the driving shaft 71 may be coupled to a knob body NB and rotated with the knob body NB. The driving shaft 71 may be linearly moved in the axial direction with the knob body NB. Therefore, when the user manipulates the knob assembly 100, the heating driving part 70 is operated as a medium of the driving shaft 71, which allows the heating device 28 to be operated.

When describing a structure of the knob assembly 100, the knob assembly 100 may include a base portion 110. The base portion 110 may be disposed at the front plate 31 of the control panel 30. A base hole 111 is formed through the base portion 110 so that the driving shaft 71 passes therethrough, and the base hole 111 may support rotation of the driving shaft 71. In other words, the base portion 110 may allow the driving shaft 71 to be stably rotated and linearly moved in the axial direction.

As another example, the base hole 111 may be omitted in the base portion 110. In this case, the driving shaft 71 does not pass through the base portion 110 and may directly pass through the front plate 31.

The base portion 110 may have a disk structure. Centered on the base hole 111 formed at a central portion of the base portion 110, a base fixation hole 112 may be formed outside the base hole 111. The base fixation hole 112 is a portion through which a first fastener B1 passes, and the first fastener B1 may fasten the base portion 110 to the front plate 31.

As another example, the base portion 110 may be omitted. As another example, the base portion 110 may be integrally formed at the control panel 30. In other words, the base portion 110 may be a portion of the control panel 30. As another example, the base portion 110 may have different polygonal shapes other than a disk shape.

A frame of the knob assembly 100 may be formed from the knob body NB. The knob body NB may surround the driving shaft 71 and the base portion 110. The knob body NB is a portion the user holds. In the embodiment, the knob body NB may include a first knob body 120 and a second knob body 130. The first knob body 120 may be exposed outwards. The second knob body 130 may be disposed inside the first knob body 120.

In the embodiment, the first knob body 120 may be exposed outwards and be a portion by which the user manipulates the knob assembly 100. The second knob body 130 may be disposed inside the first knob body 120, and be responsible for the connection to other parts, and guide a button return member S1 to be described below. As another example, the first knob body 120 and the second knob body 130 may be integrally formed with each other.

The first knob body 120 may include a knob ring 121 having a conical or cylindrical shape. The knob ring 121 is disposed to face the front plate 31. A grippable part 123 may protrude on an upper surface 122 of the knob ring 121. The grippable part 123 protrudes on the upper surface 122 of the knob ring 121 in the axial direction. The grippable part 123 may be a portion where the user grips. The grippable part 123 may extend lengthily in a direction perpendicular to the axial direction (referring to Z-axial direction in FIG. 2). Reference numeral 123a is a reference marking formed in the grippable part 123. Not shown in the drawing, a marking may also be marked on a surface of the knob ring 121.

A operating hole 125 may be formed through the knob body NB in the direction perpendicular to the axial direction. The operating portion 143 of the operating button 140 is exposed outwards through the operating hole 125 and may form the exterior part of the knob assembly 100 with the knob body NB. Referring to FIG. 2, the operating portion 143 that is a portion of the operating button 140 protrudes on the knob body NB and may form the exterior part of the knob assembly 100 with the knob body NB. In other words, it may be considered that a portion of the operating button 140 fills the operating hole 125.

In the embodiment, the operating hole 125 where the operating portion 143 of the operating button 140 protrudes may be formed through the first knob body 120. More specifically, the operating hole 125 is formed through the grippable part 123 of the first knob body 120. At this point, since the operating hole 125 is formed in the direction perpendicular to the axial direction, the operating portion 143 of the operating button 140 may also protrude through the operating hole 125 in the direction perpendicular to the axial direction. In other words, the operating hole 125 may be open in a direction perpendicular to the linearly moving direction of the knob body NB.

The operating hole 125 may be formed one of left and right surfaces of the first knob body 120. In the embodiment, the operating hole 125 may be formed on the left surface of the first knob body 120. In the embodiment, the knob assembly includes only one operating button 140, and the operating hole 125 only needs to be formed on one surface of the first knob body 120. As another example, the operating hole 125 may be formed on the right surface of the first knob body 120. As another example, the operating hole 125 may be formed each of the right and left surfaces of the first knob body 120.

As described below, the operating button 140 may be restricted from being moved because it interferes with an edge 125a of the operating hole 125 in a process of moving the operating button from a second position to a first position. The operating button 140 is caught by the edge 125a of the operating hole 125, which allows the operating button 140 to stay at an inner space 121a formed in the first knob body 120 without being completely separated from the knob body NB and. The edge 125a of the operating hole 125 may be a holding end 125a. The first position and the second position of the operating button 140 will be described in detail below.

The second knob body 130 may be disposed at the inner space 121a of the first knob body 120. The second knob body 130 may be coupled to the first knob body 120 with a second fastener B2. The second fastener B2 passes through a weight plate 160 and the second knob body 130 successively, and then may be fixed to an assembly hole 124 of the first knob body 120. Accordingly, the first knob body 120, the second knob body 130, and the weight plate 160 may be assembled with each other and operated together.

The second knob body 130 may include a coupler 131 to which an end portion of the coupling portion 150, which will be described below, is coupled. The coupler 131 may have a cylindrical shape. The coupler 131 may be disposed at a center portion of the knob body NB. A coupling groove 132 is formed in the coupler 131, and the coupling portion 150 may be inserted into the coupling groove 132. The coupling portion 150 may transmit a rotary force of the knob body NB to the coupling portion 150. In other words, in the embodiment, the knob body NB is not directly connected to the driving shaft 71, and is indirectly connected to the driving shaft 71 by the coupling portion 150.

When an end portion of the coupling portion 150 is inserted into the coupling groove 132, the coupling portion 150 may be rotated with the second knob body 130. At this point, the coupling portion 150 is moved in the axial direction with the second knob body 130 or moved independently. In other words, when the second knob body 130 is driven with the first knob body 120, the coupling portion 150 is driven selectively with the knob body NB. When the operating button 140 is located at the first position, the coupling portion 150 is not moved in the axial direction with the knob body NB, and when the operating button 140 is located at the second position, the coupling portion 150 is moved in the axial direction with the knob body NB. This structure will be described in detail below.

When the second knob body 130 is pushed in the axial direction with the first knob body 120 while the operating button 140 is disposed at the second position, the coupling portion 150 and the driving shaft 71 are also moved in the axial direction. When the second knob body 130 is rotated on the driving shaft 71 with the first knob body 120, the driving shaft 71 is also rotated with the knob bodies. Therefore, the driving shaft 71 may be a rotation shaft.

The coupling groove 132 may include a first uneven portion 135. The first uneven portion 135 may be formed on a surface of the coupling groove 132 into an uneven form connected in the circumferential direction. For example, the first uneven portion 135 may have a form of connected gear teeth. Therefore, a cross section of the coupler 131 may have a form of gear. A second uneven portion 155 of the coupling portion 150, which will be described below, may be engaged with the first uneven portion 135. As described above, when the second uneven portion 155 of the coupling portion 150 is engaged with the first uneven portion 135, the coupling portion 150 may be rotated with the second knob body 130 without spinning with no traction in the coupling groove 132.

The first uneven portion 135 may have a formed connected in the axial direction. The coupler 131 may have a cross-section formed equally in the axial direction. At the same time, the second uneven portion 155 of the coupling portion 150 may also have a form connected in the axial direction. Then, the coupling portion 150 may be inserted into the coupling groove 132 in the axial direction, or separated therefrom. Likewise, the second uneven portion 155 also has a form connected in the axial direction.

Likewise, when the coupling portion 150 is inserted into the coupling groove 132, (i) the coupling portion 150 may be linearly moved in the axial direction independently from the second knob body 130, and (ii) the coupling portion 150 may be engaged with the second knob body 130 in the circumferential direction and restrained by rotation of the second knob body 130. In other words, the coupling portion 150 is rotated with the second knob body 130. The second knob body 130 is coupled to the first knob body 120, so that the coupling portion 150 is eventually moved independently from the knob body NB in the axial direction, and rotated together.

As another example, although not shown in the drawings, the first uneven portion 135 may be formed from one key groove other than an uneven form connected in the circumferential direction, on the surface of the coupling groove 132. The second uneven portion 155 of the coupling portion 150 is inserted into one key groove. At this point, the second uneven portion 155 may also be formed from one key protrusion.

The second knob body 130 may be coupled to the coupling portion 150 and coupled to the weight plate 160 to be described below. As described above, the second knob body 130 is implemented with the coupling structure with other parts, which forms the first knob body 120 to have a relatively simple thin structure. Therefore, when the first knob body 120 is formed in the injection molding, it is possible to prevent phenomenon of sink mark or flow mark from being occurring as a portion of the first knob body 120 is contracted due to a complex form.

The second knob body 130 may include a body plate 133. The body plate 133 may have a plate structure. The coupler 131 is connected to the body plate 133. The body plate 133 is a portion coupled to the first knob body 120 and the weight plate 160. To this end, the body plate 133 includes a fastener passing hole 134 formed therethrough, and the second fastener B2 passes through the fastener passing hole 134. Referring to FIG. 4, a plate protrusion 137 is provided on the body plate 133, and the plate protrusion 137 is inserted into a plate groove 167 (referring to FIG. 3) of the weight plate 160. As another example, the second knob body 130 and the first knob body 120 may be forcibly inserted to each other or fixed to each other with an adhesive.

In the embodiment, the body plate 133 may have a semicircular form to correspond to the form of the inner space 121a. In other words, a portion of a side surface of the second knob body 130 facing the inner space 121a has a curved surface form, and the other portion of the side surface of the second knob body 130 facing the operating button 140 may have a flat surface form. The portion having a curved surface form faces an inner surface of the inner space 121a, and the portion having a flat surface form faces the operating button 140. A portion of the operating button 140 may interfere with the flat surface portion of the second knob body 130. The operating button 140 interferes with the flat surface portion of the second knob body 130, so that a moving distance from the first position to the second position may be restricted.

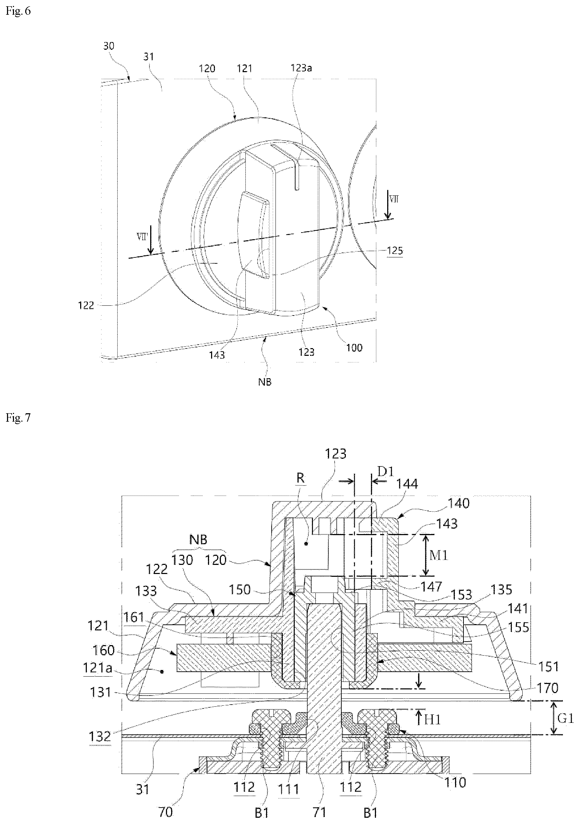

The second knob body 130 may include a support plate 136. The support plate 136 may protrude in the axial direction toward the opposite side of the base portion 110. The support plate 136 may protrude on the body plate 133 into a plate form. The support plate 136 may extend in the same direction as the grippable part 123, i.e., in the direction perpendicular to the axial direction. An end portion of the support plate 136 may be brought into close contact with the inner surface of the first knob body 120, i.e., with an inner surface of the grippable part 123. This state is shown in FIG. 7.

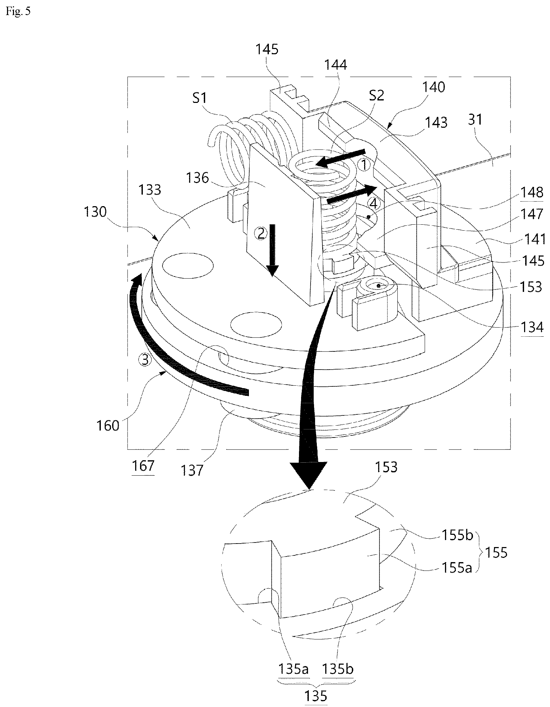

The support plate 136 may be disposed between a pair of button return members S1, which will be described below. Referring to FIG. 5, the support plate 136 is disposed between the pair of button return members S1, and may maintain an interval between the pair of button return members S1. In other words, the support plate 136 may prevent the pair of button return members S1 from being twisted in either direction in a contracting/recovery process.

A portion of the second knob body 130 without the coupler 131, and the operating button 140 may be disposed opposite each other centered on the coupler 131. More specifically, the body plate 133 and the operating button 140 may be disposed opposite each other centered on the driving shaft 71. As shown in FIG. 7, centered on the driving shaft 71, the body plate 133 is disposed at the left part, and the operating button 140 is disposed at the right part. Thereafter, this prevents the center of gravity of the knob assembly 100 from leaning toward either part due to the operating button 140. Furthermore, in the inner space 121a, the body plate 133 fills the empty space at one side without the operating button 140, which can improve the overall durability of the knob assembly 100.

As shown in FIGS. 3 and 4 again, the knob assembly 100 includes the operating button 140. The operating button 140 is disposed at the knob body NB and may be dependent on a movement of the knob body NB. Fundamentally, when the knob body NB is linearly moved in the axial direction or rotated on the driving shaft 71, the operating button 140 may be linearly moved or rotated with the knob body NB. However, the operating button 140 may be moved in a different direction from the axial direction independently from the knob body NB.

The operating button 140 may form a portion of a grippable surface that the user grips when the user grips the knob assembly 100. For example, when the user grips the knob assembly 100 with a thumb and a fore finger, the fore finger holds the surface of the grippable part 123 and simultaneously the thumb grips the operating portion 143 of the operating button 140. In this state, when the user pressurize the knob assembly 100 with the thumb and the fore finger, although the surface of the grippable part 123 is fixed, the operating portion 143 located opposite thereto is pressed and moved into the knob body NB.

As shown in FIG. 5, the operating button 140 may be disposed, based on the coupler 131, opposite to a remaining portion excluding the coupler 131 from the second knob body 130. More specifically, the body plate 133 and the operating button 140 may be disposed opposite each other centered on the driving shaft 71.

The operating button 140 may be moved between the first position and the second position. The operating button 140 has the first position forming a moving path in the axial direction independent from the coupling portion 150, and the second position forming a moving path interfering with the coupling portion 150 in the axial direction. Between the first position and the second position, only when the operating button 140 is disposed at the second position, when the knob body NB is moved in the axial direction, the driving shaft 71 is moved in conjunction with the knob body.

Specifically, (i) since the operating button 140 does not interfere with the coupling portion 150 at the first position, even when the operating button 140 and the knob body NB are pressed in the axial direction, the coupling portion 150 is not pressed together in the axial direction. Since the coupling portion 150 is connected to the driving shaft 71, when the coupling portion 150 is not pressed in the axial direction, the driving shaft 71 is also pressed in the axial direction, and the heating driving part 70 is eventually not operated.

Otherwise, (ii) since the operating button 140 interferes with the coupling portion 150 at the second position, when the operating button 140 and the knob body NB are pressed in the axial direction, the coupling portion 150 is also pressed in the axial direction. Accordingly, the driving shaft 71 is also pressed in the axial direction, and the heating driving part 70 is operated. At this point, interference is a state in which the coupling portion 150 is disposed on the shaft-directional path of the operating button 140, so that the operating button 140 is moved in the axial direction and moves the coupling portion 150 together in the axial direction.

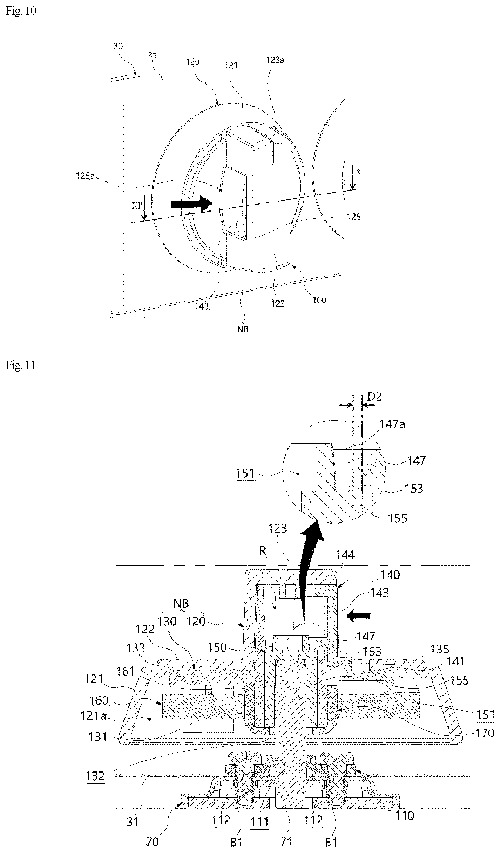

Meanwhile, the first position is a state in which the operating button 140 protrudes relatively on the knob body NB, and is a state shown in FIGS. 6 and 7. At the first position, the operating button 140 is disposed at the farthest location from the driving shaft 71 in the radial direction. At the same time, the first position is a state in which a safety pin 150 is located at the farthest location from the driving shaft 71 in the radial direction. The second position is a location where the operating button 140 is moved when being pressed from the first position, and is the state shown in FIGS. 10 and 11. At the second position, the operating button 140 is disposed closest to the driving shaft 71 in the radial direction. At the same time, the second position is a location where the safety pin 150 is disposed closest to the driving shaft 71 in the radial direction.

At this point, the operating button 140 may be linearly moved between the first position and the second position in a direction different from the axial direction. In the embodiment, the operating button 140 may reciprocate between the first position and the second position while being moved in a direction perpendicular to the axial direction. As another example, the operating button 140 may be moved in an oblique direction while having a predetermined angle with respect to the axial direction. As another example, the operating button 140 may be moved while having a curved path with respect to the axial direction.

FIGS. 6 and 7 are views showing the operating button 140 located at the first position. FIGS. 10 and 11 are views showing the operating button 140 located at the second position. In other words, when the operating button 140 at the first position is pressed, the operating button 140 may be moved to the second position. The operating button 140 at the second position may be returned to the first position again when an external force pressing the operating button 140 is removed.

As shown in FIG. 7, at the first position, the operating button 140 is spaced from the coupling portion 150 in the axial direction without overlapping with the coupling portion 150. At this point, a radial distance of spacing the operating button 140 and the coupling portion 150 from each other is a first distance D1. The first distance D1 is a distance for the operating button 140 to be moved in the radial direction. More specifically, the first distance D1 is a distance between a pusher 147 of the operating button 140 and the second uneven portion 155 of the coupling portion 150. At this point, the radial direction is, a radial direction of the driving shaft, and may be a radial direction based on a rotation path of the knob body NB.

In FIG. 7, the knob body NB is not moved in the axial direction, so a shaft-directional distance M1 between the knob body NB and the coupling portion 150 is the farthest state.

As shown in FIG. 11, at the second position, the operating button 140 overlaps and interferes with the coupling portion 150 in the axial direction. At this point, a radial distance of overlapping the operating button 140 and the coupling portion 150 with each other is a second distance D2. More specifically, the second distance D2 is a distance between an end portion 147a of the pusher 147 of the operating button 140 and an edge of a stepped surface 153 of the coupling portion 150. Referring to the drawing, at the second position, the pusher 147 of the operating button 140 is disposed at the upper portion of the coupling portion 150, so that the pusher 147 and the coupling portion 150 overlap with each other in the axial direction, and the radial-directional distance of the overlapped portion is the second distance D2.

When describing a structure of the operating button 140 with reference to FIG. 5, the operating button 140 may include a button body 141. The button body 141 may be inserted into the inner space 121a. The button body 141 may extend in a direction perpendicular to the axial direction. A side surface of the button body 141 may have a form of curved surface to correspond to the inner surface of the inner space 121a.

The button body 141 may include the operating portion 143. The operating portion 143 may extend in a direction of standing the operating portion on the button body 141. At this point, the standing direction is a vertical direction based on FIG. 5. The operating portion 143 may be a portion that the user pushes to manipulate the button body 141. The grippable surface may be formed by at least a part of the operating portion 143 exposed through the operating hole 125 outwards of the knob assembly 100.

As shown in FIG. 7, the operating portion 143 and the support plate 136 of the second knob body 130 may be disposed to face each other. A predetermined empty space R is formed between the operating portion 143 and the support plate 136, and the empty space is an available space to enable the operating portion 143 of the operating button 140 to be moved.

The operating portion 143 may include a protrusion end 144. The protrusion end 144 may extend from the operating portion 143 in a direction perpendicular to the direction in which the operating portion 143 extends from the button body 141. The protrusion end 144 may expand a contact area between the surface of the operating portion 143 and the surface of the knob body NB. As shown in FIG. 7, an upper surface of the protrusion end 144 and a lower surface of the first knob body 120 forming the knob body NB are in contact with each other. The protrusion end 144 enables the operating button 140 to be moved stably in a constant direction (left-right direction based on FIG. 7).

The operating portion 143 may include an elastic supporter 145. The elastic supporter 145 supports an end portion of the button return member S1. The elastic supporter 145 is provided at each side of the operating portion 143, supporting the ends of the pair of button return members S1. The elastic supporter 145 may protrude more toward the center of the inner space 121a than the operating portion 143. A surface of the elastic supporter 145 may have a flat surface structure.

In the embodiment, the pair of elastic supporters 145 is disposed more outward than the support plate 136 of the second knob body 130. The pair of button return members S1 is disposed on either side of the support plate 136. The pair of button return members S1 may be respectively supported by the pair of elastic supporters 145. Accordingly, when the ends of the pair of button return members S1 are supported by the pair of elastic supporters 145, and the support plate 136 may maintain an interval between the pair of button return members S1.

The button return members S1 may provide elasticity to the operating button 140 in a direction of moving the operating button 140 to the first position. In the embodiment, the button return members S1 are disposed at the opposite sides of the support plate 136. The pair of button return members S1 enables the operating button 140 to reciprocate in a constant direction without leaning or twisting in one direction. Each button return member S1 is made of an elastic member such as a coil spring.

The opposite end portions of each button return member S1 may be supported by the surface of the knob body NB and the surface of the operating button 140 disposed to face each other. More specifically, a first end of each button return member S1 may be supported by the elastic supporter 145, and a second end of the button return member S1 may be supported by an inner wall 127 (referring to FIG. 4) of the first knob body 120.

As shown in FIG. 5, the operating button 140 may include the pusher 147. The pusher 147 interferes with the coupling portion 150 at the second position. In other words, at the second position, the pusher 147 interferes with a surface of the coupling portion 150 in the axial direction. The pusher 147 is a portion that pushes the coupling portion 150 in the axial direction. The pusher 147 may protrude from the operating button 140 toward the coupling portion 150 in the radial direction.

The pusher 147 may include a pusher groove 148 surrounding an edge of the coupling portion 150. The pusher groove 148 may have a structure recessed in a direction radially away from the coupling portion 150. The pusher groove 148 surrounds the stepped surface 153 of the coupling portion 150, expanding a contact area between the stepped surface 153 and the pusher 147.

As shown in FIGS. 3 and 4, the coupling portion 150 is provided in the knob body NB. The coupling portion 150 may be disposed between the knob body NB and the driving shaft 71. At this point, the space between the knob body NB and the driving shaft 71 means the space between the knob body NB and the driving shaft 71 based on the radial direction of the driving shaft 71. The coupling portion 150 may transmit the rotary force of the knob body NB to the driving shaft 71, between the driving shaft 71 and the knob body NB. On the other hand, the coupling portion 150 may also transmit the rotary force of the driving shaft 71 to the knob body NB.

The coupling portion 150 may have a cylindrical shape. An end portion of the driving shaft 71 may be connected to an inner portion of the coupling portion 150. An outer portion of the coupling portion 150 may be inserted into the second knob body 130. Accordingly, the coupling portion 150 may connect the second knob body NB and the driving shaft 71 to each other.

The coupling portion 150 may include the shaft coupling groove 151 into which the end portion of the driving shaft 71 is inserted. When the end portion of the driving shaft 71 is inserted into the shaft coupling groove 151, the driving shaft 71 and the coupling portion 150 may be rotated together without spinning with no traction. To this end, the inner portion of the shaft coupling groove 151 and the end portion of the driving shaft 71 may have "D"-shaped cross-sections matching each other.

The second uneven portion 155 may be provided on the surface of the coupling portion 150. The second uneven portion 155 may be engaged with the first uneven portion 135 of the second knob body 130. When the second uneven portion 155 is engaged with the first uneven portion 135, the coupling portion 150 is rotated with the second knob body NB. The second uneven portion 155 may be formed on the surface of the coupling portion 150 into an uneven form continuous in the circumferential direction.

As shown in the enlarged part of FIG. 5, the first uneven portion 135 may include a first protrusion 135a, and a first recessed part 135b recessed relatively more than the first protrusion 135a. The second uneven portion 155 may include a second protrusion 155a, and a second recessed part 155b recessed relatively more than the second protrusion 155a. The second protrusion 155a is inserted into the first recessed part 135b, and the first protrusion 135a is inserted into the second recessed part 155b. Accordingly, the first uneven portion 135 and the second uneven portion 155 are engaged with each other so that the coupling portion 150 and the second knob body NB are rotated together.

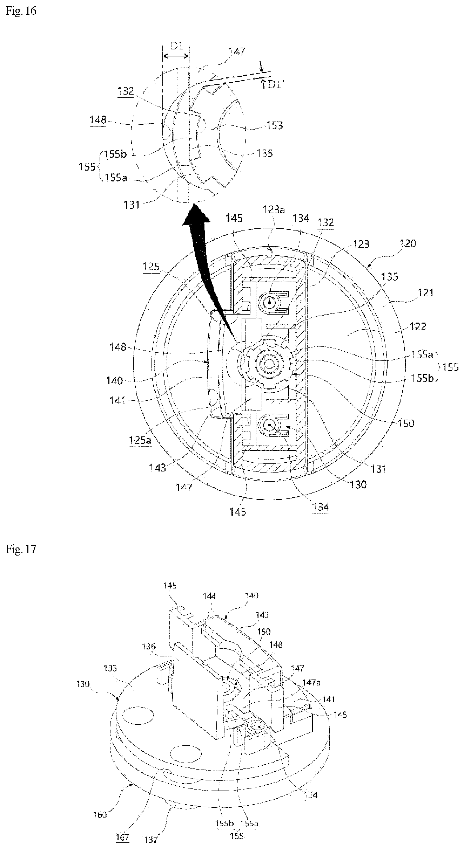

The second uneven portion 155 may protrude in a direction of expanding an area where the operating button 140 and the coupling portion 150 overlap with each other in the axial direction. As shown in FIG. 16, the view shows that the second uneven portion 155 protrudes toward the operating button 140. As described above, when the coupling portion 150 protrudes in the direction of expanding an area where the coupling portion and the operating button 140 overlap with each other in the axial direction, interference between the operating button 140 and the coupling portion 150 may be further stably performed when the operating button 140 is located at the second position.

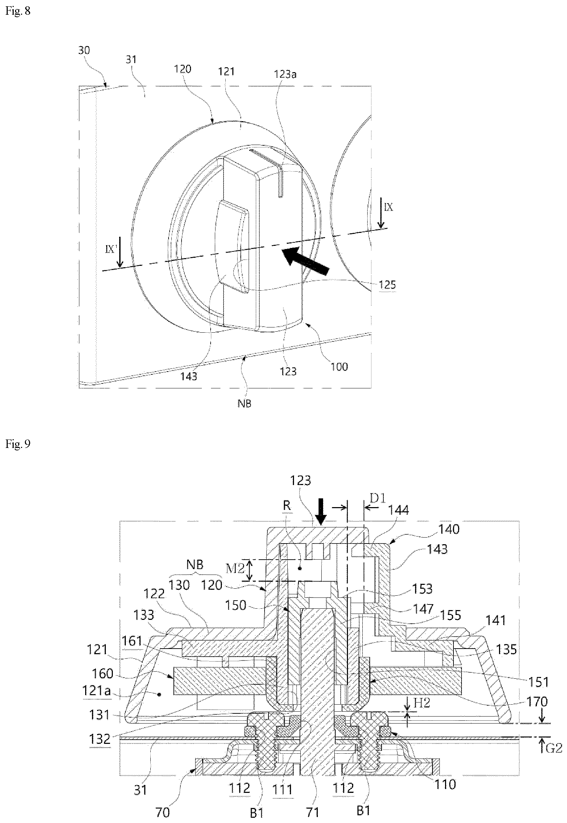

Since the second uneven portion 155 is engaged with the first uneven portion 135, the coupling portion 150 may be rotated with the second knob body NB. However, the coupling portion 150 may be moved in the axial direction independently from the second knob body NB. The coupling portion 150 may be inserted into the coupler 131 of the second knob body NB in the axial direction, and be separated from the coupler 131 in the axial direction. More specifically, based on FIG. 7, the coupling portion 150 may be separated upwards from the coupler 131. This state is shown in FIG. 9. When the operating button 140 is located at the first position, the coupling portion 150 does not interfere with the operating button 140, and may remain in an original location without being lowered with the operating button 140.

The coupling portion 150 may include the stepped surface 153. As shown in FIGS. 3 and 5, the stepped surface 153 is provided on an end portion of the coupling portion 150 and changes the cross-sectional area of the coupling portion 150. The operating button 140 interferes with the stepped surface 153 at the second position. The stepped surface 153 may be formed in a portion where the second uneven portion 155 is omitted on the outer circumferential surface of the coupling portion 150 to reduce the diameter of the cross section of the coupling portion 150.

As shown in FIG. 5, a knob return member S2 may be provided between the knob body NB and the coupling portion 150 and provide an elastic force to the knob body NB in a direction far away from the coupling portion 150. The knob return member S2 may push the first knob body NB in the direction away from an end portion of the coupling portion 150. The knob return member S2 may be made of a coil spring. In FIG. 7, the knob return member S2 is omitted, and the knob return member S2 may be disposed in the empty space R formed between the operating portion 143 and the support plate 136.

When the operating button 140 is moved from the first position to the axial direction, the operating button 140, the knob body NB, and the weight plate 160 may only be moved in the axial direction, and the driving shaft 71 and the coupling portion 150 remain at original locations thereof. This is because the pusher 147 of the operating button 140 does not interfere with the coupling portion 150 and is moved in a separate path. At this point, when the user removes a force of pushing the knob body NB, the knob return member S2 may push the knob body NB in the axial direction and return it to original location.

More specifically, when the user pushes the knob body NB in the axial direction without pushing the operating button 140, the coupling portion 150 and the driving shaft 71 remain at the original location thereof (original height based on FIG. 7). The user does not press the driving shaft 71, so the user feels a relatively small resistance and intuits that the driving shaft is not working properly. When the user removes the force of pressing the knob body NB, the knob return member S2 may move the knob body NB in the direction away from the coupling portion 150 and return it to the original location.

For reference, FIGS. 8 and 9 are views showing the operating button 140 in impressed state (first position), and showing the knob body NB moved in the axial direction. In this state, the coupling portion 150 and the driving shaft 71 remain in the original locations, and the knob body NB, the operating button 140, and the weight plate 160 are only moved in the axial direction (downward movement). Accordingly, a shaft-directional distance M2 between the knob body NB and the coupling portion 150 is reduced in comparison to the distance in FIG. 7.

At this point, the elasticity of the knob return member S2 is low, so when the knob body NB is pressed, the knob return member S2 may be compressed between the coupling portion 150 and the knob body NB and absorb the force of pressing the knob body NB. Accordingly, even when the user presses the knob body NB and moves the knob body NB in the axial direction, the coupling portion 150 and the driving shaft 71 may be prevented from being moved in the axial direction, due to the knob return member S2.

In the embodiment, a first end portion of the knob return member S2 is connected to an upper end of the first knob body 120, and a second end portion of the knob return member S2 is connected to the stepped surface 153 of the coupling portion 150. The knob return member S2 may be disposed in the axial direction. The knob return member S2 may be disposed between the pair of button return members S1.

As another example, the knob return member S2 may be omitted. When the knob return member S2 is omitted, the user can return the knob body NB to the original location manually.

When describing operations of the knob body NB and the operating button 140 with reference to FIG. 5, the operating button 140 may be pressed in a direction of arrow ①. When the operating button 140 is pressed in the direction of arrow ①, the operating button 140 is moved from the first position to the second position. For reference in FIG. 5, the operating button 140 is disposed at the first position and does not interfere with the coupling portion 150 in the axial direction.

When the operating button 140 is moved in the direction of arrow ①, the operating button 140 interferes with the coupling portion 150. When the knob assembly 100 including the second knob body 130 is moved in the axial direction (direction of arrow ②) in the interfering state, the pusher 147 of the operating button 140 may interfere with the coupling portion 150 and move the coupling portion 150 together in the axial direction (direction of arrow ②). In this process, the driving shaft 71 is also moved in the axial direction (direction of arrow ②).

The knob assembly 100 moved in the axial direction as described above may be rotated in a direction of arrow ③. At this point, with the second knob body 130, the first knob body 120, the operating button 140, and the coupling portion 150 may also be rotated. The knob assembly 100 may be rotated in a direction opposite to the direction of arrow ③. Meanwhile, when the user removes the force of pressing the operating button 140, the operating button 140 may be moved in a direction of arrow ④ and returned to the first position by the button return member S1.

Referring to FIGS. 3 and 4 again, the weight plate 160 may be coupled to the knob body NB, and rotated and moved with the knob body NB. The weight plate 160 may have a disk structure to correspond to the inner space 121a. The weight plate 160 increases the total weight of the knob assembly 100, thereby improving control of the knob assembly 100. To this end, the weight plate 160 may be made of a metal material.

A shaft passing hole 161 may be formed through a central portion of the weight plate 160, and the driving shaft 71 may be inserted into the shaft passing hole 161. A plate fastening hole 164 through which the second fastener B2 passes and the plate groove 167 may be formed around the shaft passing hole 161. The plate groove 167 is fitted over the plate protrusion 137 of the body plate 133.

As shown in FIGS. 3 and 4, the knob body NB may include a coupling holder 170 supporting a second end portion of the coupling portion 150. The coupling holder 170 may support a lower end of the coupling portion 150 so that the coupling portion 150 is not separated from the knob body NB. The coupling holder 170 is not directly coupled to the coupling portion 150, but may be coupled to the second knob body NB. Reference numeral 171 indicates a shaft hole through which the driving shaft 71 passes.

The coupling holder 170 may include a holder space 172 in which the coupling portion 150 may be stored. With the coupling portion 150 stored in the holder space 172, the coupling holder 170 may be coupled to the second knob body NB. Then, before the coupling portion 150 is connected to the driving shaft 71, the coupling portion 150 may be stored in the knob body NB to improve the ease of assembly. In other words, with the coupling portion 150 stored in the knob body NB by the coupling holder 170, when the knob body NB is assembled with the driving shaft 71 in the axial direction, the coupling portion 150 may be fitted over the end portion of the driving shaft 71.

The coupling holder 170 includes a holder plate 173, and a holder fastening hole 174 is formed through the holder plate so that the second fastener B2 passes therethrough. The holder fastening hole 174 may be aligned with the fastener passing hole 134 of the body plate 133. As another example, the coupling holder 170 may be omitted. In this case, the coupling portion 150 may be directly coupled to the driving shaft 71.

FIGS. 6 to 14 show the operation of the parts constituting the embodiment successively. First, as shown in FIGS. 6 and 7, the views show the operating button 140 located at the first position. When the operating button 140 is located at the first position, the operating portion 143 protrudes outward of the operating hole 125. When the operating button 140 is located at the first position, the pusher 147 of the operating button 140 has a location where it does not interfere with the coupling portion 150 in the axial direction, i.e., a separate shaft-directional path. The pusher 147 and the coupling portion 150 are spaced from each other in the radial direction at the first distance D1. Furthermore, a shaft-directional distance between the coupling holder 170 and the first fastener B1 fastened to the base portion 110 is H1. Reference numeral G is a shaft-directional distance between the first knob body 120 and the front plate 31.

In this state, when the user presses the knob body NB, the knob body NB does not press the driving shaft 71. FIGS. 8 and 9 are views showing the knob body NB pressed in the axial direction without pressing the operating button 140. As shown in FIG. 9, the pusher 147 of the operating button 140 does not interfere with the coupling portion 150, and may be lowered more than the coupling portion 150, i.e., lowered toward the front plate 31. With the coupling portion 150 and the driving shaft 71 that are fixed in the axial direction, the knob body NB, the operating button 140, and the weight plate 160 are only lowered. Therefore, the operation of the heating driving part 70 by the driving shaft 71 is not performed.

Therefore, to operate the heating driving part 70, the user should first press the operating button 140. When the user presses the operating button 140 in a direction of arrow in FIG. 10, the operating button 140 may be inserted into the knob body NB. At this point, the user should press the operating portion 143 while overcoming the elastic force of the button return member S1. Then, the operating button 140 may be moved to the second position. As described above, the operating button 140 protruding sideways may be pressed naturally when the user grips the knob body NB. Therefore, even when the operating button 140 is added, the ease of assembly of the knob assembly 100 is not deteriorated, and the user can easily control the cooking apparatus.

Referring to FIG. 11, when describing the inner structure of the knob assembly 100 with the operating button 140 moved to the second position, the operating button 140 is moved close to the coupling portion 150 in the radial direction of the driving shaft 71. The pusher 147 of the operating button 140 is moved to an upper portion of the coupling portion 150 and interferes with the coupling portion 150 in the axial direction. Therefore, when the operating button 140 is lowered with the knob body NB, it is a state that the coupling portion 150 may be pushed in the axial direction.

At this point, a radial distance of overlapping the operating button 140 and the coupling portion 150 with each other is a second distance D2. The second distance D2 is a distance between the pusher 147 of the operating button 140 and the edge of the stepped surface 153 of the coupling portion 150. As described above, the pusher 147 and the coupling portion 150 overlap with each other in the axial direction, and the second distance D2, i.e., the radially overlapped distance, may be equal to a contact distance when the pusher 147 moves the coupling portion 150 in the axial direction.

As shown in FIGS. 12 and 13, it is shown that the user presses the operating button 140 and moves the operating button 140 to the second position, and presses the knob body NB in the axial direction. Since the pusher 147 of the operating button 140 and the stepped surface 153 of the coupling portion 150 interfering with each other earlier, when the knob body NB and the operating button 140 are moved in the axial direction, the coupling portion 150 may be moved together. Accordingly, FIG. 13 shows the driving shaft 71 connected to the coupling portion 150 that is also lowered in the axial direction. At this point, compared to FIG. 7, the axial direction the distance M1 between the knob body NB and the coupling portion 150 is maintained, and both the knob body NB and the coupling portion 150 are moved in the axial direction. Furthermore, a shaft-directional distance H2 between the coupling holder 170 and the first fastener B1 fastened to the base portion 110 is reduced, and a shaft-directional distance G2 between the first knob body 120 and the front plate 31 is reduced.

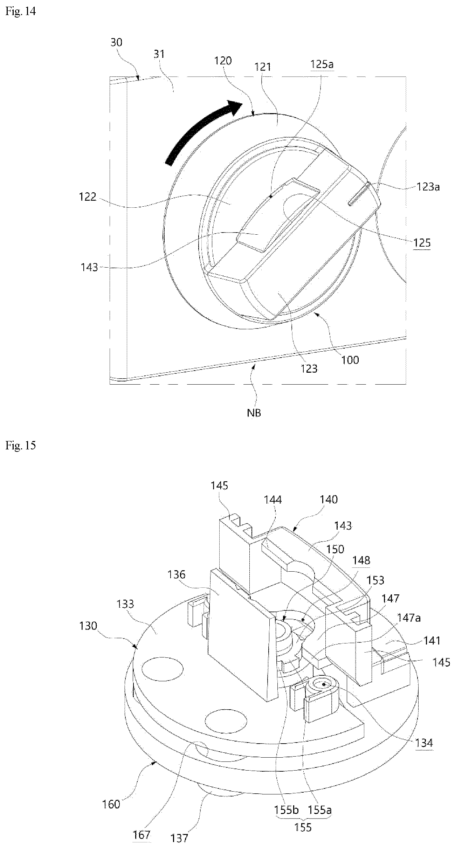

As described above, when the driving shaft 71 is also lowered in the axial direction, the heating driving part 70 is operated. In this state, FIG. 14 shows the knob body NB rotated by the user. FIG. 14 illustrates the knob body NB rotated clockwise, and the driving shaft 71 may also be rotated clockwise with the knob body NB. As described above, when the knob body NB is rotated, the operating button 140 may be moved to a third position. At this point, when the driving shaft 71 is rotated together by the knob body NB, it is possible to implement functions such as fire control of the cooking apparatus, the number of activated heating devices 28, selection of cooking modes, and the like.

As described above, in the embodiment, the operation of the operating button 140 precedes the operation of the knob body NB. Only when the operating button 140 is moved to the second position, in the shaft-directional movement of the knob body NB, the driving shaft 71 may be moved together with the knob body NB, and the heating driving part 70 may be operated.

When describing in detail the structure and operation of the operating button 140, FIGS. 15 and 16 show relative locations of the operating button 140 and the coupling portion 150 in FIGS. 6 and 7. As shown in FIG. 15, at the first position, the pusher 147 of the operating button 140 is spaced from the stepped surface 153 of the coupling portion 150 in the radial direction. In FIG. 16, a radial direction distance between the pusher 147 of the operating button 140 and the second uneven portion 155 protruding on the stepped surface 153 is indicated as D1. The distance D1 allows the knob body NB and the operating button 140 to be independently moved without interfering with the coupling portion 150 when the knob body NB is moved in the axial direction.

More specifically, the second protrusion 155a of the second uneven portion 155 and the pusher groove 148 of the pusher 147 are spaced from each other at the first distance D1, and are moved in the axial direction without interfering with each other. In FIG. 16, reference numeral D1' indicates a distance between the second protrusion 155a of the second uneven portion 155 and the pusher groove 148 of the pusher 147 at the closest position.

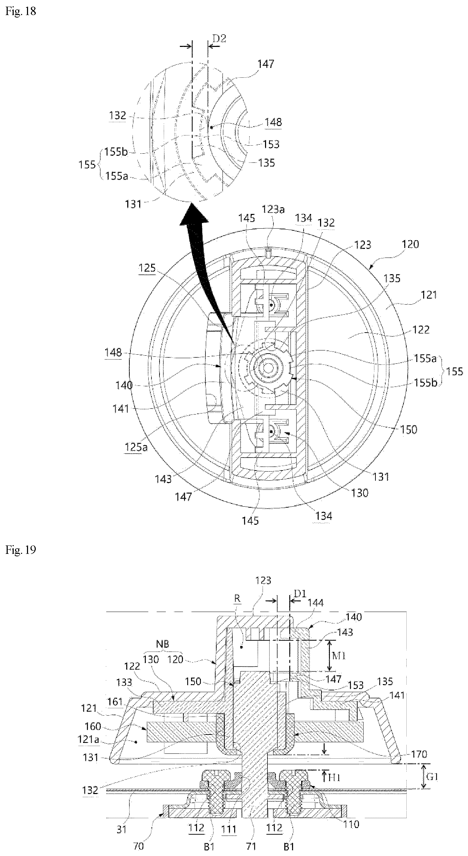

FIGS. 17 and 18 show relative locations of the operating button 140 and the coupling portion 150 in FIGS. 10 and 11. As shown in FIG. 17, at the second position, the pusher 147 of the operating button 140 overlaps with the stepped surface 153 of the coupling portion 150 in the radial direction. In FIG. 18, a radial-directional overlapped distance between the pusher 147 of the operating button 140 and the second uneven portion 155 protruding on the stepped surface 153 is indicated as D2. The overlapped distance D2 is a contact distance where the coupling portion 150 is pressed while interfering with the coupling portion 150 when the knob body NB and the operating button 140 are moved in the axial direction.

More specifically, the second protrusion 155a of the second uneven portion 155 and an edge of the pusher groove 148 of the pusher 147 overlap with each other at the second distance D2, and are moved in the axial direction while interfering with each other. Since the pusher 147 is located at a relatively upper portion (based on FIG. 17), it is considered that the pusher 147 may press the coupling portion 150 in the axial direction.

As described above, in the embodiment, the operating button 140 may be operated in a different direction from the shaft-directional movement of the knob body NB. When the direction of pressing the operating button 140 (radial direction) and the direction of pressing the knob body NB (axial direction) are formed different, it is less likely that the user accidentally operates the knob assembly 100.

FIG. 19 shows an inner structure of a second embodiment of the knob assembly 100 according to the present disclosure. Explaining parts different from the structure of the previously described embodiment, the driving shaft 71 may include the coupling portion 150 integrally formed. The coupling portion 150 is formed into a part of the driving shaft 71. The coupling portion 150 may have, on an end portion of the driving shaft 71, a structure protruding in the radial direction of the driving shaft 71. Referring to FIG. 19, the coupling portion 150 has a relatively larger diameter than a lower portion of the driving shaft 71.

Although not shown in the drawing, the coupling portion 150 may be omitted. In this case, the pusher 147 of the operating button 140 may interfere with the driving shaft 71 and move the driving shaft 71 in the axial direction.

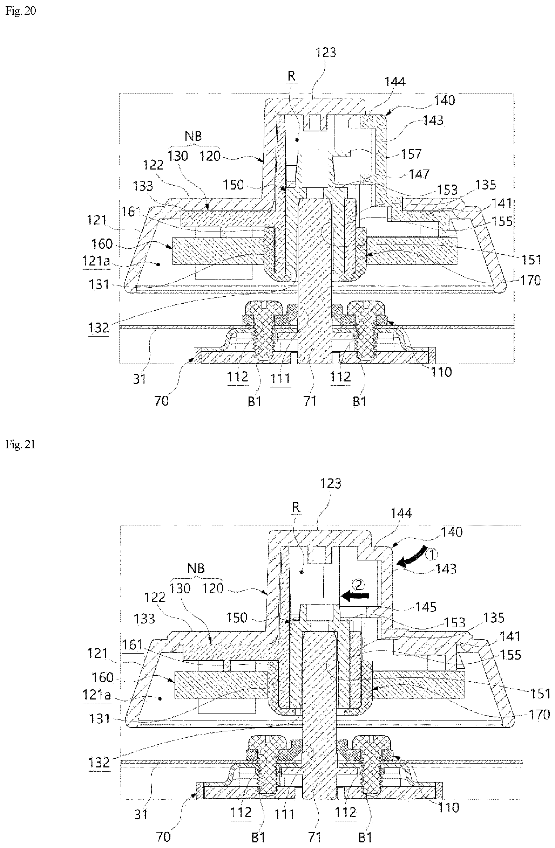

FIG. 20 shows an inner structure of a third embodiment of the knob assembly 100 according to the present disclosure. Explaining parts different from the structure of the previously described embodiment, the driving shaft 71 includes the coupling portion 150 integrally formed. The coupling portion 150 includes the stepped surface 153, thereby interfering with the pusher 147 of the operating button 140 in the axial direction.

The coupling portion 150 includes a coupling protrusion 157 at a location spaced from the stepped surface 153 in the axial direction. The coupling protrusion 157 protrudes from an upper portion of the coupling portion 150 in the radial direction. The pusher 147 may be located between the coupling protrusion 157 and the stepped surface 153. When the pusher 147 is returned upward in the axial direction (based on FIG. 20), the pusher interferes with the coupling protrusion 157, and the coupling portion 150 may also be returned.

FIG. 21 shows an inner structure of a fourth embodiment of the knob assembly 100 according to the present disclosure. Explaining parts different from the structure of the previously described embodiment, the knob body NB may include the operating button 140 integrally formed. The operating button 140 may be formed by cutting a portion of the knob body NB. The operating button 140 may have a cantilevered structure in which a second end portion of the operating button is rotated with the first end portion fixed to the knob body NB. In the embodiment, the operating portion 143 of the operating button 140 constitutes a portion of the exterior part of the knob body NB.

The pusher 147 may be provided at a lower portion of the operating button 140. The pusher 147 further protrudes from the lower portion of the operating button 140 in the radial direction toward the coupling portion 150. The pusher 147 protrudes toward the coupling portion 150, and at the second position, the pusher 147 may interfere with the coupling portion 150 in the axial direction. In the embodiment, the operating button 140 is integrally formed in the knob body NB, so it may be considered that both the operating button 140 and the pusher 147 is the pusher 147.

In FIG. 21, the arrow ① indicates a direction of pressing and rotating the operating button 140. When the user presses the operating portion 143 of the operating button 140, the second end portion of the operating button 140 (lower end portion based on the drawing), which is not connected to the knob body NB, may be rotated to the empty space R provided in the knob body NB. In this process, the pusher 147 is disposed at an upper portion of the coupling portion 150 and interferes in the axial direction. The arrow ② indicates a direction of moving the pusher 147 to the second position.

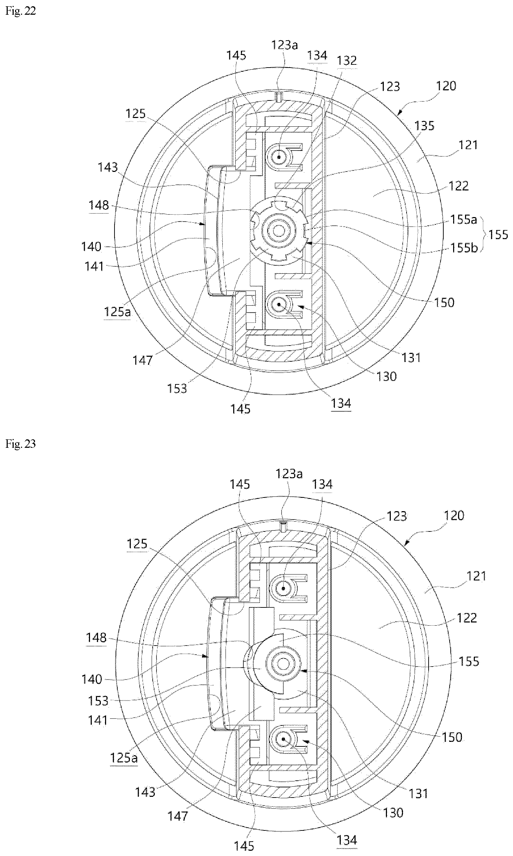

FIG. 21 shows an inner structure of a fifth embodiment of the knob assembly 100 according to the present disclosure. Explaining parts different from the structure of the previously described embodiment, the pusher 147 of the operating button 140 may have a polygonal flat surface structure. In the embodiment of FIG. 22, the pusher 147 may have a rectangular form. The pusher 147 does not a separate pusher groove, and an end portion 148 of the pusher 147 may overlap with the stepped surface 153 in the axial direction.

FIG. 23 shows an inner structure of a sixth embodiment of the knob assembly 100 according to the present disclosure. Explaining parts different from the structure of the previously described embodiment, the stepped surface 153 of the coupling portion 150 may have a circular or semicircular form. In the embodiment, the coupling portion 150 may have the semicircular stepped surface 153. The semicircular stepped surface 153 may prevent the coupling portion 150 from spinning with no traction with the driving shaft 71, and simultaneously expand an interference area with respect to the pusher 147.

## Claims

1. A knob assembly comprising:
a driving shaft (71) protruding from a control panel;
a knob body (NB) configured to rotate about the driving shaft (71) and configured to move linearly in an axial direction along the driving shaft (71),
a coupling portion (150) connected to the driving shaft (71) and movable independently of the knob body (NB) along the axial direction; and
an operating button (140) having an operating portion (143) exposed externally of the knob body (NB) and movable in a direction different from the axial direction,
wherein the operating button (140) has:
(i) a first position in which the operating button (140) defines a movement path independent from the coupling portion (150) along the axial direction, and
(ii) a second position in which the operating button (140) defines a movement path interfering with the coupling portion (150) along the axial direction.

2. The knob assembly of claim 1, wherein when the knob body (NB) is moved in the axial direction while the operating button (140) is arranged at the second position, the coupling portion (150) is moved in the axial direction with the operating button (140).

3. The knob assembly of claim 1, or 2, wherein at the first position, the knob body (NB) and the operating button (140) are moved in the axial direction independently from the coupling portion (150), and
at the second position, the knob body (NB) and the operating button (140) are moved in the axial direction along with the coupling portion (150).

4. The knob assembly of claim 1, 2, or 3, wherein the coupling portion (150) between the driving shaft (71) and the knob body (NB) transmits a rotation force of the knob body (NB) to the driving shaft (71).

5. The knob assembly of any one of claims 1 to 4, wherein the operating button (140) comprises a pusher (147) interfering with a surface of the coupling portion (150) in the axial direction, at the second position, and
the pusher (147) protrudes from the operating button (140) in a direction different from the axial direction.

6. The knob assembly of any one of claims 1 to 5, wherein the operating button (140) comprises a pusher (147) interfering with a surface of the coupling portion (150) in the axial direction, at the second position, and
the pusher (147) comprises a pusher (147) groove surrounding an edge of the coupling portion (150).

7. The knob assembly of any one of claims 1 to 6, wherein, at the first position, the operating button (140) and the coupling portion (150) are spaced from each other by a first distance (D1) in a radial direction of the driving shaft (71), and
at the second position, the operating button (140) and the coupling portion (150) overlap with each other by a second distance (D2) in the radial direction of the driving shaft (71).

8. The knob assembly of claim 7, wherein the second distance (D2) is longer than the first distance (D1).

9. The knob assembly of any one of claims 1 to 8, wherein the coupling portion (150) is formed on an end portion of the driving shaft (71) integrally with the driving shaft (71).

10. The knob assembly of any one of claims 1 to 9, wherein the knob body (NB) comprises a coupler (131) into which the coupling portion (150) is inserted, and
the coupling portion (150) comprises a shaft coupling groove (151) into which an end portion of the driving shaft (71) is inserted.

11. The knob assembly of any one of claims 1 to 10, wherein the coupling portion (150) is disposed between the knob body (NB) and the driving shaft (71) in a radial direction of the driving shaft (71).

12. The knob assembly of any one of claims 1 to 11, wherein the knob body (NB) comprises a coupler (131) into which the coupling portion (150) is inserted, and
a first uneven portion (135) and a second uneven portion (155) are respectively formed on a surface of the coupling portion (150) and a surface of the coupler (131).

13. The knob assembly of claim 12, wherein the first uneven portion (135) is formed into a continued uneven shape in a circumferential direction on the surface of the coupler (131), and the second uneven portion (155) is formed into a continued uneven shape in a circumferential direction on the surface of the coupling portion (150), and/or
wherein the second uneven portion (155) protrudes in a direction of widening an area of the operating button (140) and the coupling portion (150) overlapping with each other in the axial direction.

14. The knob assembly of any one of claims 1 to 13, wherein the coupling portion (150) comprises a stepped surface (153) that forms a cross-sectional area of the coupling portion (150) differently, and the operating button (140) interferes with the stepped surface (153) at the second position, and/or
wherein a knob return member is provided between the knob body (NB) and the coupling portion (150) and provides an elastic force to the knob body (NB) in a direction away from the coupling portion (150).

15. The knob assembly of any one of claims 1 to 14, wherein a button return member (S1) is provided in the knob body (NB), and the button return member (S1) provides an elastic force to the operating button (140) in a direction of moving the operating button (140) to the first position, and/or
wherein at the second position, the operating button (140) interferes with a first end portion of the coupling portion (150), and the knob body (NB) comprises a coupling holder (170) supporting a second end portion of the coupling portion (150), and/or
wherein the operating button (140) is moved between the first position and the second position independently from the knob body (NB) in a direction different from the axial direction, and when the knob body (NB) is rotated on the driving shaft (71), the operating button (140) is rotated wⁱth the knob body (NB) and is moved to a third position.
